(19) Europäisches Patentamt
European Patent Office
Office européen des brevets

(11) Veröffentlichungsnummer : **0 090 922**
**B1**

# (12) EUROPÄISCHE PATENTSCHRIFT

(45) Veröffentlichungstag der Patentschrift : **10.09.86**

(51) Int. Cl.⁴ : **C 08 L 81/02**, C 08 K 5/54

(21) Anmeldenummer : **83101118.4**

(22) Anmeldetag : **07.02.83**

## (54) Verwendung von Siloxanen zur Modifizierung von hochmolekularen p-Polyphenylensulfiden und hochmolekulare modifizierte p-Polyphenylensulfide.

(30) Priorität : **19.02.82 DE 3205993**

(43) Veröffentlichungstag der Anmeldung : **12.10.83 Patentblatt 83/41**

(45) Bekanntmachung des Hinweises auf die Patenterteilung : **10.09.86 Patentblatt 86/37**

(84) Benannte Vertragsstaaten : **BE DE FR GB IT**

(56) Entgegenhaltungen :
**DE-A- 2 853 882**
**US-A- 3 652 493**
**US-A- 3 929 708**
**US-A- 4 284 549**

(73) Patentinhaber : **BAYER AG**
**Konzernverwaltung RP Patentabteilung**
**D-5090 Leverkusen 1 Bayerwerk (DE)**

(72) Erfinder : **Idel, Karsten, Dr.**
**Scheiblerstrasse 81**
**D-4150 Krefeld (DE)**
Erfinder : **Freitag, Dieter, Dr.**
**Hasenheide 10**
**D-4150 Krefeld (DE)**
Erfinder : **Merten, Josef, Dr.**
**Krünsend 30**
**D-4052 Korschenbroich (DE)**

**EP 0 090 922 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung ist die Verwendung von 0,1-2 Gew.-% bezogen auf das Gesamtgewicht der Mischung aus p-Polyphenylensulfid mit Siloxan, Siloxanen der allgemeinen Formel I

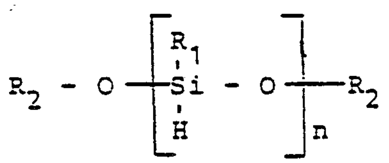 (I)

worin $R_1$ $C_1$- bis $C_{18}$-Alkyl, $C_5$-$C_6$-Cycloalkyl, $C_2$-$C_{18}$-Alkenyl, $C_5$-$C_6$-Cycloalkenyl oder $C_6$-$C_{12}$-Aryl, $R_2$ die gleiche Bedeutung wie $R_1$ hat und zusätzlich Trimethylsilyl sein kann und « n » eine ganze Zahl von 1 bis 100 ist, zur Modifizierung von hochmolekularen p-Polyphenylensulfiden.

Ein weiterer Gegenstand der vorliegenden Erfindung sind hochmolekulare modifizierte p-Polyphenylensulfide, gekennzeichnet durch einen Gehalt von 0,1 bis 2 Gew.-%, bezogen auf das Gesamtgewicht der Mischung aus Polyphenylensulfid mit Siloxanen, an Siloxanen der Formel I gemäß

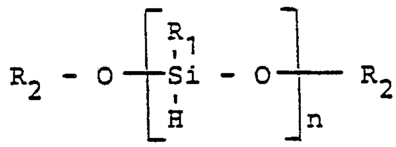 (I)

worin $R_1$, $R_2$ und « n » die in oben genannte Bedeutung haben.

Die modifizierten hochmolekularen p-Polyphenylensulfide können gegebenenfalls zusammen mit zusätzlichen Siloxanen der Formel I, zur Herstellung von Mischungen bestehend aus 30 bis 98 Gew.-% hochmolekularem p-Polyphenylensulfid und 2 bis 70 Gew.-% eines thermoplastichen aromatischen Polycarbonats und/oder thermoplastischen Polyesters und/oder thermoplastischen aromatischen Polyestercarbonats, bezogen jeweils auf die Gewichtssumme der Mischung aus unmodifiziertem hochmolekularem p-Polyphenylensulfid mit Polycarbonat und/oder mit Polyester und/oder mit Polyestercarbonat, verwendet werden, wobei der Gehalt an Siloxanen der Formel I

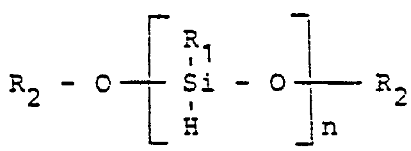 (I)

worin $R_1$, $R_2$ und « n » die oben genannte Bedeutung haben, jeweils 0,1 Gew.-% bis 2 Gew.-%, bezogen auf Gesamtgewicht der Mischung bestehend aus Siloxan und p-Polyphenylensulfid mit Polycarbonat und/oder mit Polyester und/oder mit Polyestercarbonat, beträgt.

Bei der Stabilisierung von Mischungen bestehend aus 98 Gew.-% bis 30 Gew.-% hochmolekularen p-Polyphenylensulfiden und 2 Gew.-% bis 70 Gew.-% thermoplastischen, aromatischen Polycarbonaten und/oder thermoplastischen, Polyestern und/oder thermoplastischen, aromatischen Polyestercarbonaten werden den Komponenten der Mischung oder der Gesamtmischung vor oder während deren thermoplastischer Verarbeitung 0,1 bis 2 Gew.-%, bezogen auf die Gewichtssumme der Mischung aus Siloxan und p-Polyphenylensulfid mit Polycarbonat und/oder mit Polyester und/oder mit Polyestercarbonat, eines Siloxans der Formel I

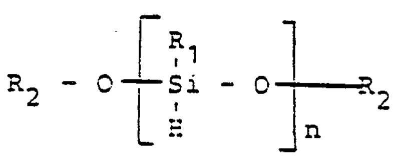 (I)

worin $R_1$, $R_2$ und « n » die oben genannte Bedeutung haben, zugegeben.

Die Verarbeitung der Gesamtmischung erfolgt in handelsüblichen Schneckenmaschinen oder Knetern bei Temperaturen zwischen 270° und 420 °C.

Weiterhin können Mischungen bestehend aus 0,1-2,0 Gew.-% an Siloxan der Formel I

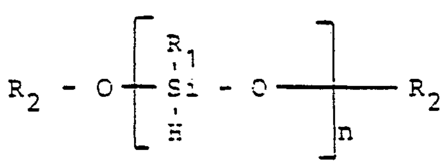 (I)

worin $R_1$, $R_2$ und « n » die oben genannte Bedeutung haben, und

99,9 bis 98,0 Gew.-% an einer Mischung bestehend aus

98 Gew.-% bis 30 Gew.-% an hochmolekularem p-Polyphenylensulfid und

2 Gew.-% bis 70 Gew.-% an thermoplastische aromatischen Polycarbonaten und/oder thermoplastischen Polyestern und/oder thermoplastischen, aromatischen Polyestercarbonaten, hergestellt werden.

Die Mischungen können zur Herstellung von Formkörpern Folien oder Fasern gegebenenfalls nach Zusatz von anderen Polymeren, Pigmenten, Füllstoffen, Stabilisatoren und/oder Entformungsmitteln, verwendet werden.

Bevorzugte Siloxane sind solche der Formel I worin $R_1$ $C_1$-$C_4$-Alkyl ist.

Insbesondere sind Siloxane der Formel I geeignet, worin $R_1$ $CH_3$ und $R_2$ $Si(CH_3)_3$ ist.

Bevorzugte Werte für « n » sind 2 bis 50.

Die Herstellung der Siloxane der Formel I ist bekannt und beispielsweise beschrieben in « Walter Noll, Chemie und Technologie der Silikone », Verlag Chemie, 2. Auflage, 1968, Seiten 44 ff, 76 ff, 123-124, 128 und 175.

p-Polyphenylensulfid und seine Herstellung und Verwendung sind bekannt. (Siehe beispielsweise US-Patent 25 38 941, US-Patent 25 13 188, US-Patent 33 54 129, DE-AS 24 53 749, DE-OS 26 23 363, US-Patent 40 38 261, US-Patent 40 38 259, US-Patent 40 38 263, DE-OS 26 23 362, US-Patent 40 38 262, DE-OS 26 23 333, US-Patent 40 46 114, US-Patent 40 38 260, US-Patent 40 39 518, DE-OS 28 17 731, US-Patent 41 16 947, sowie die deutschen Offenlegungsschriften 29 30 710 und 29 30 797).

Bei vielen Herstellungsverfahren für p-Phenylensulfide muß sich ein Härtungs- oder Curingschritt anschließen, um *via* Kettenverlängerung und Verzweigung das Eigenschaftsbild der p-Polyphenylensulfide zu verbessern. (Siehe z. B. US-Patent 37 17 620, US-Patent 35 24 835 und US-Patent 38 39 301).

Mischungen von p-Polyphenylensulfiden mit thermoplastischen Polycarbonaten bzw. thermoplastischen Polyestern und gegebenenfalls weiteren Zusätzen sind ebenfalls bekannt (siehe beispielsweise DE-OS 25 03 336 japanische Patentanmeldung 133 612/74 (Mitsubishi Petro. Chem. Industries), US-Patent 40 21 596, japanische Patentanmeldungen 101 873/75 (Unitika KK), 132 827/76 (Sumitomo Chemical), 3103/77 (Unitika Ltd.) und 140 342/76 sowie US-Patent 41 40 671.

Ziel derartiger Abmischungen ist es im allgemeinen, die Neigung der p-Polyphenylensulfide zur Sprödigkeit, die sich in einer relativ niedrigen Schlagzähigkeit bzw. Kerbschlagzähigkeit äußert, zu verringern. Nachteilig bei derartigen Mischungen ist jedoch, daß bei deren thermoplastischer Verarbeitung die Mischungspartner, also die Polycarbonate bzw. Polyester einem gewissen Abbau unterliegen, der sich auf das Eigenschaftsniveau der Mischungen ungünstig auswirkt. Überraschenderweise wurde gefunden, daß durch den erfindungsgemäßen Einsatz der Siloxane der Formel (I) der Abbau der Mischungspartner weitgehend vermieden werden kann.

Aus US-Patent 42 11 687 bzw. DE-OS 28 33 024 ist bekannt, daß der Zusatz von p-Polyphenylensulfid zu aromatischen Polyestern deren geringe hydrolytische Stabilität gegenüber kochendem Wasser verbessert (siehe insbesondere die Beispiele 2 bis 6). Die Tatsache, daß p-Polyphenylensulfide als Zusätze zu Polyestern und Polycarbonaten bei deren thermoplatischen Verarbeitung einen Abbau der Polyester bzw. Polycarbonate bewirken, ist in diesen Lit.-Stellen nicht angesprochen und wird durch diese auch nicht nahegelegt.

Bei Mitverwendung von Glas als Füllstoffe werden u. a. organische Silanverbindungen in bekannter Weise als Kupplungsmittel eingesetzt. Daraus war jedoch nicht abzuleiten, daß die erfindungsgemäß einzusetzenden Siloxane der Formel I den erwähnten Abbau der Mischungspartner weitgehend vermeiden.

p-Phenylensulfide im Sinne der Erfindung sind hochmolekulare verzweigte p-Polyphenylensulfide die man dadurch erhält, daß man

a) Dihalogenbenzole, von denen 50 bis 100 Mol-% der Formel (II)

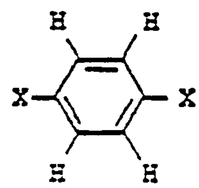

(II)

entsprechen und 0 bis 50 Mol-% der Formel (III)

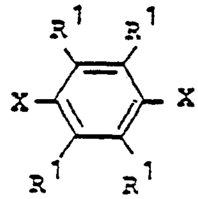

(III)

wobei

X Fluor, Chlor, Brom und Iod, vorzugsweise Chlor und Brom ist und

$R^1$ gleich oder verschieden ist und Wasserstoff, $C_1$-$C_{20}$-Alkyl, $C_5$-$C_{20}$-Cycloalkyl, $C_6$-$C_{24}$-Aryl, $C_7$-$C_{24}$-Alkaryl oder $C_7$-$C_{24}$-Aralkyl sein kann, und/oder zwei Reste R zu einem aromatischen oder heterocyclischen Ring verknüpft sein können, und immer mindestens ein Rest $R^1$ verschieden von Wasserstoff ist, und

b) 0,1 bis 2,4 Mol-%, bevorzugt 0,4 bis 2,0 Mol-%, bezogen auf die Dihalogenbenzole, eines Polyhalogenaromaten der Formel (IV)

$$ArX_n \qquad (IV)$$

wobei

Ar ein aromatischer oder heterocyclischer Rest mit 6-24 C-Atomen ist,

X die gleiche Bedeutung wie in Formel (II) und (III) hat, und

n 3 oder 4 ist ;

c) ein Alkalisulfid, bevorzugt Natrium- oder Kaliumsulfid oder deren Mischung, bevorzugt in Form der Hydrate oder wäßriger Mischungen, gegebenenfalls zusammen mit Alkalihydroxiden wie beispielsweise Natriumhydroxid in einem

d) polaren Lösungsmittel, wobei das molare Verhältnis von a) zu c) im Bereich von 0,85 : 1 bis 1,15 : 1, bevorzugt 0,95 : 1 bis 1,05 : 1 und von c) zu d) im Bereich von 1 : 2 bis 1 : 15 liegt, gemäß den oben genannten bekannten Verfahren miteinander umsetzt und in bekannter Weise isoliert.

Beispiele für geeignete p-Dihalogenaromaten der Formel (II) sind : p-Difluorbenzol, p-Dichlorbenzol, p-Dibrombenzol, p-Dijodbenzol, 1-Fluor-4-chlorbenzol, 1-Fluor-4-brombenzol, 1-Chlor-4-brombenzol, 1-Chlor-4-jodbenzol und 1 Brom-4-jodbenzol. Sie sind allein oder im Gemisch verwendbar.

Beispiele für geeignete p-Dihalogenaromaten der Formel (II) sind : 2,5-Dichlortoluol, 2,5-Dichlorxylol, 1-Ethyl-2,5-dichlorbenzol, 1-Ethyl-2,5-Dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol. Sie sind allein oder im Gemisch miteinander einsetzbar.

Beispiele für geeignete Polyhalogenaromaten der Formel (IV) sind :

1,2,3-Trichlorbenzol, 1,2,4-Trichlorbenzol, 1,2,4-Tribrombenzol, 1,2,4-Trijodbenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 2,4,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlor-triazin.

Zur besonderen Charakterisierung der erfindungsgemäß geeigneten p-Polyphenylensulfide wird die Schmelzviskosität bei 306 °C (gemessen in Pa·s) in Abhängigkeit von der Schubspannung (gemessen in Pa) mit Hilfe der Instrom-Rotationsviskosimeters (Modell 3 250 der Fa. Instron, Durchmesser des Kegels und der Platte 2 cm) bestimmt.

Für die erfindungsgemäßen Mischungen sind vorzugsweise p-Polyphenylensulfide mit einer Schmelzviskosität von $2 \times 10^0$ bis $5 \times 10^4$ Pa·s, insbesondere $5 \times 10^2$ bis $2 \times 10^4$ Pa·s geeignet.

Als hochmolekulare, aromatische, thermoplastische Polycarbonate können verwendet werden bekannte Polycarbonate, die aus Diphenolen wie Resorcin, Hydrochinon, aus Dihydroxydiphenylen und insbesondere aus Bis-(hydroxyphenyl)-alkanen, wie beispielsweise Bis-(4-hydroxyphenyl)-propan-2,2 (Bis-phenol A), Bis-(4-hydroxy-3,5-dimethylphenyl)-propan-2,2, aus Dreikernbisphenolen wie α,α-Bis-(4-hydroxyphenyl)-p-diisopropylbenzol, aus halogenierten Bis(hydroxyphenyl)-alkanen wie beispielsweise 4,4'-Dihydroxy-3,5,3',5'-tetrachlordiphenyl-propan-2,2 oder 4,4'-Dihydroxy-3,5,3',5'-tetrabromdiphenyl-propan-2,2, Bis-(hydroxyphenyl)-cycloalkanen, -sulfonen, -sulfoxyden, -ethern oder -sulfiden, gegebenenfalls im Gemisch mit Glykolen, mit Derivaten der Kohlensäure, beispielsweise ihren Diestern oder Dihalogeniden, hergestellt sind und die ein mittleres Molekulargewicht ($\bar{M}w$) von mindestens etwa 10 000, vorzugsweise von etwa 20 000 und bis etwa 200 000 und insbesondere von 25 000 bis 80 000 besitzen, ermittelt durch Messungen der rel. Viskosität von $CH_2Cl_2$ bei 25 °C und einer Konzentration von 0,5 Gew.-%.

Einschlägige Literaturstellen für die geeigneten Diphenole und die Polycarbonate sind beispielsweise US-Patent 30 28 365, die DE-OS 20 63 050 sowie die Monographie « H. Schnell, Chemistry and Physics of Polycarbonates, Interscience Publishers, New York, 1964 ».

Bevorzugte Diphenole für die einsetzbaren Polycarbonate sind : 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, α,α'-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxy-phenyl)-propan, 2,2-Bis-(3,5-dichlor-4-hydroxyphenyl)-propan, 2,2-Bis-(3,5-dibrom-4-hydroxyphenyl)-propan.

Besonders bevorzugte Diphenole sind z. B. :

2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan.

Bevorzugte aromatische Polycarbonate sind solche, denen ein oder mehrere der als bevorzugt genannten Diphenole zugrundeliegen. Besonders bevorzugt werden Copolycarbonate, denen 2,2-Bis-(4-

hydroxyphenyl)-propan und eines der anderen als besonders bevorzugt genannten Diphenole zugrundeliegen. Besonders bevorzugt sind weiterhin Polycarbonate allein auf Basis von 2,2-Bis-(4-hydroxyphenyl)-propan oder 2,2-Bis-(3,5-dimethyl-4-hydroxyphenyl)-propan.

Die aromatischen Polycarbonate können nach bekannten Verfahren hergestellt werden, so z. B. nach dem Schmelzumesterungsverfahren aus Bisphenol und Diphenylcarbonat und dem Zweiphasengrenzflächenverfahren auf Bisphenolen und Phosgen, wie es in der obengenannten Literatur beschrieben ist.

Die aromatischen Polycarbonate können in bekannter Weise durch den Einbau geringer Mengen, vorzugsweise von Mengen zwischen 0,05 und 2,0 Mol.-% (bezogen auf eingesetzte Diphenole), an drei- oder mehr als dreifunktionellen Verbindungen, insbesondere solchen mit drei oder mehr als drei phenolischen Hydroxygruppen verzweigt sein.

Polycarbonate dieser Art sind z. B. in den deutschen Offenlegungsschriften 1 570 533, 1 595 762, 2 116 974, 2 113 347, der britischen Patentschrift 1 079 821, der US-Patentschrift 3 544 514 und in dem deutschen Patent 2 500 092 beschrieben.

Einige der verwendbaren Verbindungen mit drei oder mehr als drei phenolischen Hydroxygruppen sind beispielsweise 2,4-Bis-(4-hydroxyphenyl-isopropyl)-phenol, 2,6-Bis-(2′-hydroxy-5′-methyl-benzyl)-4-methylphenol, 2-(4-Hydroxyphenyl)-2,4-dihydroxyphenyl)-propan und 1,4-Bis-(4,4″-dihydroxytriphenylmethyl)-benzol. Einige der sonstigen dreifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol.

Thermoplastische Polycarbonate können auch aus Mischungen von verschiedenen Polycarbonaten aufgebaut sein, beispielsweise aus solchen von sehr hochmolekularen mit normalen hochmolekularen Polycarbonaten gemäß DE-OS 27 29 763 oder von normalen hochmolekularen Polycarbonaten mit geringen Mengen an niedermolekularen Polycarbonaten mit $\bar{M}w < 10\,000$ insbesondere mit Polymerisationsgraden von 3 bis 15.

Thermoplastische Polyester sind aromatische Polyester und aliphatische Polyester und aromatischaliphatische Polyester, denen die erfindungsgemäss modifizierten p-Polyphenylensulfide zugesetzt werden können. Aliphatische Polyester sind aus der aus hochmolekularen polymeren Glycolterephthalaten oder -isophthalaten bestehenden Familie mit wiederkehrenden Einheiten der allgemeinen Formel :

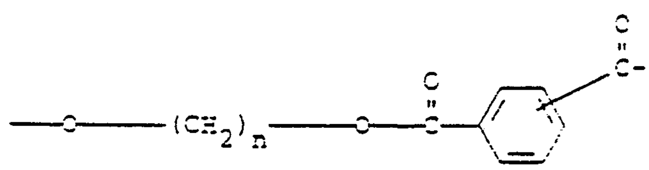

ausgewählt, worin

n eine ganze Zahl von 2 bis 6 ist,

und Mischungen derartiger Ester, einschließlich von Mischpolyestern von Terephthal- und Isophthalsäuren.

Polyalkylenglykolterephthalate denen die erfindungsgemäss modifizierten p-Polyphenylensulfide zugesetzt werden können sind z. B. solche auf Basis von Ethylenglykol, Propandiol-1,3, Butandiol-1,4 und Hexandiol-1,6.

Die Molekulargewichte ($\bar{M}_w$) dieser Polyalkylenglykolterephthalate liegen zwischen 10 000 und 80 000. Die Polyalkylenglykolterephthalate können nach bekannten Verfahren beispielsweise aus Terephthalsäuredialkylester und dem entsprechenden Diol durch Umesterung erhalten werden (siehe z. B. US-Patente 2 647 885, 2 643 989, 2 534 028, 2 578 660, 2 742 494, 2 901 466). Zur Herstellung geht man beispielsweise von einem niederen Alkylester der Terephthalsäure, vorzugsweise dem Dimethylester, aus und estert diesen mit einem Überschuß an Diol in Gegenwart geeigneter Katalysatoren zum Bishydroxyalkylester der Terephthalsäure um. Dabei wird die Temperatur ausgehend von 140 °C auf 210-220 °C erhöht. Der in Freiheit gesetzte Alkohol wird abdestilliert. Die Aufkondensation erfolgt anschließend bei Temperaturen von 210-280 °C, der Druck wird dabei stufenweise bis auf weniger als 1 Torr erniedrigt, wobei das überschüssige Diol abdestilliert wird.

Die Herstellung der Polyalkylenglykolisophthalate sowie der Mischpolyester von Terephthal- und Isophthalsäuren kann ebenfalls nach dem oben beschriebenen Kondensationsverfahren erfolgen.

Die Molekulargewichte $\bar{M}w$ der Isophthalate liegt zwischen 10 000 und 80 000, die Molekulargewichte $\bar{M}w$ der Mischpolyester aus Terephthal- und Isophthalsäuren liegen zwischen 10 000 und 100 000.

Besonders bevorzugte aliphatische thermoplastische Polyester sind Polyethylenterephthalate mit $\bar{M}w$ zwischen 10 000 und 80 000 sowie Polybutylenterephthalate mit $\bar{M}w$ zwischen 10 000 und 80 000.

Aromatische Polyester denen die erfindungsgemäss modifizierten p-Polyphenylensulfide zugesetzt werden können sind solche auf Basis von Terephthalsäure und/oder Isophthalsäure und Bisphenolen mit Molekulargewichten ($\bar{M}w$ Gewichtsmittel) von 10 000 bis 100 000, insbesondere von 10 000 bis 50 000, gemessen über Gelchromatographie nach bekannten Methoden.

Zur Herstellung der aromatischen Polyester werden vorzugsweise Gemische aus Terephthalsäuredichlorid und Isophthalsäuredichlorid im Molverhältnis 7 : 3 bis 3 : 7 eingesetzt. Insbesondere werden Gemische aus Terephthalsäuredichlorid und Isophthalsäuredichlorid im Molverhältnis 1 : 1 eingesetzt.

Geeignete Diphenole für die Herstellung der aromatischen Polyester sind solche der Formel (VI)

HO—Z—OH (VI)

worin

Z ein zweiwertiger ein- oder mehrkerniger aromatischer Rest mit 6 bis 30 C-Atomen ist, bevorzugte Diphenole sind die der Formel (VII)

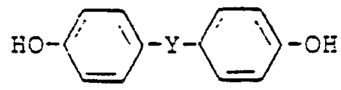

(VII)

worin

Y eine Einfachbindung, einen Alkylen- oder Alkylidenrest mit 1 bis 5 C-Atomen, einen Cyclohexylen- oder Cyclohexylidenrest, —O—, —S—, —SO—, —$SO_2$— oder —CO— bedeutet.

Für die Herstellung der aromatischen Polyester geeignete Diphenole sind beispielsweise die bereits für die Herstellung der aromatischen Polycarbonate geeigneten Diphenole.

Bevorzugte Diphenole für die Herstellung der aromatischen Polyester sind

Bisphenol A = 2,2-Bis-(4,4-dihydroxy-diphenyl)-propan, Tetramethylbisphenol A, 1,1-Bis-(4-hydroxyphenyl)-isobutan, 1,1-Bis-(4-hydroxyphenyl)-cyclohexan, 4,4-Dihydroxydiphenylsulfid, 4,4-Dihydroxydiphenyl, 4,4-Dihydroxydiphenylsulfon sowie deren di- und tetrahalogenierten Derivate. Besonders bevorzugt ist Bisphenol A. Es können auch beliebige Mischungen der vorgenannten Diphenole verwendet werden.

Die aromatischen Polyester können nach dem Phasengrenzflächenverfahren hergestellt werden gemäß Lit.-Stelle W.M. Eareckson, J. Polymer Sci., XL, 399 (1959).

Hierbei können als Kettenregler beliebige Phenole dienen, insbesondere jedoch die Verbindungen der Formel (VIII).

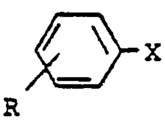

(VIII)

worin

X OH, O—CO—Cl oder COCl und

R ein verzweigter Alkylrest mit 8 bis 9 C-Atomen ist, mit der Maßgabe, daß im Alkylrest R der Anteil von Methyl-Wasserstoffatomen, bezogen auf sämtliche Wasserstoffatome des Alkylrests R, 47 bis 89 % beträgt, daß R in o- und/oder p-Position steht und die Obergrenze des o-Isomerenanteils 20 % beträgt. Diese als Kettensiegler einzusetzenden Verbindungen sind entweder bekannt oder auf einfache Weise herzustellen (siehe DE-OS 29 40 024 bzw. DE-OS 28 42 005).

Die für die Abmischungen mit Polyphenylensulfid geeigneten aromatischen Polyester lassen sich auch durch Schmelzkondensation (siehe A. Conix, Ind. Eng.-Chem., *51*, 147 (1959) oder US-Patent 33 95 119) herstellen.

Die ebenfalls als Mischungspartner mitzuverwendenden thermoplastischen aliphatisch-aromatischen Polyester sind beispielsweise bekannt aus US 34 71 441.

Die ebenfalls als Mischungspartner mitzuverwendenden thermoplastischen, aromatischen Polyester-Polycarbonate sind beispielsweise bekannt aus DE-OS 20 09 494 bzw. DE-OS 20 52 378 bzw. dem entsprechenden US-Patent 37 29 447.

Die Mischungen werden nach bekannten Verfahren durch Mischen in der Schmelze erhalten, so z. B. über das Compoundieren in handelsüblichen Schneckenmaschinen oder Knetern bei Temperaturen zwischen 270 °C und 420 °C.

Dabei können die einzelnen Bestandteile der Mischungen also das p-Polyphenylensulfid, der oder die Legierungspartner und die Siloxane der Formel I direkt zusammengegeben und anschließend nach den gängigen Verfahren thermoplastisch verarbeitet werden, z. B. durch Extrusion, Kneten oder Spritzgießen. Jede andere Form der Dosierung wie z. B. die Zudosierung einer mit dem Siloxan stark angereicherten analogen Mischung als Konzentrat über einen Seitenextruder zu der in der Extrusion befindlichen Mischung der Thermoplasten oder die Zugabe der Siloxane über eine an dem Extruder angebrachte Dosierungseinrichtung ist möglich.

Die Herstellung der erfindungsgemäss modifizierten hochmolekularen p-Polyphenylensulfide besteht darin, die Siloxane der Formel I in die p-Polyphenylensulfide z. B. durch Extrusion oder Kneten bei Temperaturen zwischen 290 °C und 400 °C und einzuarbeiten.

Werden p-Polyphenylensulfide in dieser Weise mit den Siloxanen der Formel I modifiziert, so besitzen sie im Vergleich zu unbehandelten p-Polyphenylensulfiden schon verbesserte mechanische Eigenschaften, z. B. eine erhöhte Schlagzähigkeit, so daß ihre technische Verwendung der bekannten Verwendung der bekannten p-Polyphenylensulfide überlegen ist.

Bei den erhaltenen p-Polyphenylensulfidmischungen mit Polyestern und/oder Polycarbonaten, wird ein deutlich verringerter Abbau des p-Polyphenylensulfidmischungspartners nach der thermoplastischen

Verarbeitung festgestellt, wenn der Vergleich zu nicht Siloxan-modifizierten, analogen p-Polyphenylensulfidmischungen gezogen wird. Als Folge davon besitzen die erhaltenen p-Polyphenylensulfidmischungen auch im Vergleich zu analogen, nach dem bisherigen Stand der Technik erhaltenen Mischungen ein besseres mechanisches Eigenschaftsbild.

Zwecks Überprüfung des Abbaus der Mischungspartnern werden die p-Polyphenylensulfidmischungen zerkleinert und extrahiert, z. B. mit chlorierten Kohlenwasserstoffen wie Methylenchlorid. Die so extrahierten Polycarbonate und Polyester zeigen eine höhere Lösungsviskosität und damit ein höheres Molekulargewicht im Vergleich zu Polycarbonaten und Polyestern aus analog, aber nicht erfindungsgemäß, d. h. ohne Siloxan-Stabilisierung, erhaltenen Legierungen.

Die erfindungsgemäßen modifizierten hochmolekularen p-Polyphenylensulfide können als solche in bekannter Weise technisch überall dort verwendet werden, wo die bislang bekannten hochmolekularen p-Polyphenylensulfide technische Verwendung finden, vorzugsweise natürlich als Mischungspartner in den Mischungen mit thermoplastischen Polycarbonaten und/oder thermoplastischen Polyestern und/oder thermoplastischen Polyestercarbonaten.

Die Thermoplastenmischung kann direkt durch Extrusion, Extrusionsblasen, Spritzgießen oder sonst übliche Verarbeitungstechniken in bekannter Weise zu Folien, Formkörpern oder Fasern verarbeitet werden, welche in üblicher Weise Verwendung finden als Automobilteile, Armaturen, Elektroteile, Teile in der elektronischen Industrie, Chemikalienresistente Teile und Apparate wie Pumpengehäuse und Pumpenflügelräder, Ätzbadschalen, Dichtungsringe, Teile von Büromaschinen und Fernmeldeeinrichtungen, sowie Haushaltsgeräte, Ventile, Kugellagerteile etc.

Die Mischungen können auch mit anderen Polymeren mit Pigmenten und Füllstoffen, wie beispielsweise Graphit oder Metallpulver, organischen Verstärkungsfasern z. B. Kevlar oder Kohlefasern gemischt oder mit den für Polyphenylensulfide bzw. thermoplastische Polycarbonate bzw. thermoplastische Polyester üblichen Additiven, wie beispielsweise bekannten Stabilisatoren oder Entformungsmitteln, versetzt werden.

Die in den nachfolgenden Beispielen eingesetzten Polycarbonate sind aromatische Homopolycarbonate.

Polycarbonat (PC) A: Auf Basis von 2,2-Bis-(4-hydroxyphenyl)-propan. Lösungsviskosität $\eta$ rel = 1.295 (gemessen bei 25 °C an einer 0,5 %igen Methylenchloridlösung).

Polycarbonat (PC) B: Auf Basis von 2,2-Bis-(3,5-dimethyl-4-hydroxyphenyl)-propan. Lösungsviskosität $\eta$ rel = 1,318 (gemessen bei 25 °C an einer 0,5 %igen Methylenchloridlösung).

Polyphenylensulfid (PPS) C: Als p-Polyphenylensulfid wurde ein Ryton P4® der Phillips Petroleum Comp. eingesetzt. Schmelzviskosität $\eta$m bei 306 °C bei einer Schubspannung von $\tau = 10^2$ Pa: $\eta$m = 4 500 Pa·s (gemessen mit dem Instron-Viskosimeter).

arom. Polyester (APE) D: Der aromatische Polyester ist hergestellt auf Basis von 2,2-Bis-(4-hydroxyphenyl)-propan und einem 50/50 Gemisch aus Iso- und Terephthalsäurechlorid. Lösungsviskosität $\eta$ rel = 1,312 (gemessen bei 25 °C an einer 0,5 %igen Methylenchloridlösung).

### Beispiel 1 (Vergleich)

In einem Laborkneter wurden 50 g des handelsüblichen p-Polyphenylensulfid C mit 50 g Polycarbonat A 30 Minuten bei 320 °C unter Luftausschluß verschmolzen.

Anschließend wurde der Schmelzblock staubfein zerkleinert, und mit Hilfe von Methylenchlorid das Polycarbonat aus der Legierung extrahiert.

Als Maß für den Molekulargewichtsabbau des Polycarbonats wurde die relative Lösungsviskosität $\eta$ rel (gemessen bei 25 °C an 0,5 %igen Lösungen von Polycarbonat in Methylenchlorid) vor und nach der Compoundierung bestimmt.

| | | Abbau Polycarbonat $\eta$ rel | |
|---|---|---|---|
| 50 g Polycarbonat A | 50 g Polyphenylensulfid C | vorher | nachher |
| 320° / 30' | | 1,295 | 1,192 |

Nach der Verschmelzung mit nicht erfindungsgemäß stabilisiertem PPS C ist ein deutlicher Molekulargewichtsabbau beim Polycarbonat festzustellen.

### Beispiel 2 (Vergleich)

Polycarbonat A und PPS C wurden in der gleichen Apparatur bei 320 °C verschieden lang miteinander unter Luftausschluß verschmolzen. Die Aufarbeitung erfolgte analog Beispiel 1.

Wie aus der Tabelle 1 ersichtlich, ist mit zunehmender Zeit ein immer Stärker werdender Polycarbonatabbau zu verzeichnen.

Tabelle 1

| P P S | P C | Zeit/Temp. | Abbau Polycarbonat $\eta$ rel vorher | nachher |
|---|---|---|---|---|
| 50 g PPS C | 50 g Polycarbonat A | 30' / 320°C | 1,295 | 1,192 |
| " | " | 60' / " | 1,295 | 1,179 |
| " | " | 120' / " | 1,295 | 1,150 |
| " | " | 240' / " | 1,295 | 1,047 |

Beispiel 3

Apparatur und Fahrweise wie Beispiel 2, jedoch wurden zusätzlich 0,5 Gew.-%, bezogen auf das Gesamtgewicht der Polycarbonat/p-Polyphenylensulfid-Legierung, eines Poly-(methyl-H-Siloxans) der Formel I ($R_1 = CH_3$ ; $R_2 = Si(CH_3)_3$ ; n = 10 bis 12) zugesetzt. Ein deutlich geringerer Polycarbonat-Abbau im Vergleich zu den Siloxan-freien Legierungen des Beispiel 2 konnte festgestellt werden.

(Siehe Tabelle 2 Seite 9 f.)

Tabelle 2

| PPS | PC | | Siloxan *) | Abbau Polycarbonat $\eta_{rel}$ vorher | nachher |
|---|---|---|---|---|---|
| 50 g PPS C | 50 g PC A | 30' / 320°C | 0,5 Gew.-% | 1,295 | 1,252 |
| " | " | 60' / " | " | 1,295 | 1,232 |
| " | " | 120' / " | " | 1,295 | 1,223 |
| " | " | 240' / " | " | 1,295 | 1,183 |

*) Poly-(methyl-H-siloxan) der Formel I ($R_1 = CH_3$, $R_2 = Si(CH_3)_3$, n = 10 bis 12).

Beispiel 4 (Vergleich)

Wie Beispiel 1, jedoch wurden anstelle von PC A die gleiche Menge eines aromatischen Polyesters (APE D) eingesetzt, der durch eine Zweiphasengrenzflächen-Kondensation von Bisphenol A und einem 50/50-Gemisch aus Tere- und Isophthalsäurechlorid nach gängigem Verfahren mit p-Isooctylphenol als Kettenabbrecher gewonnen wurde. Relative Lösungsviskosität η rel des APE D : 1,312.

| | | Abbau von APE η rel vorher | nachher |
|---|---|---|---|
| 50 g APE D + 50 g PPS C | 320°C / 30' | 1,312 | 1,203 |

Beispiel 5

Wie Beispiel 4, jedoch mit 0,5 Gew.-% bezogen auf das Gesamtgewicht der Legierung, des in Beispiel 3 verwendeten Siloxans.

| | | Siloxan*) | Abbau von APE η rel vorher | nachher |
|---|---|---|---|---|
| 50 g APE D + 50 g PPS C | 320°C / 30' | 0,5 Gew.-% | 1,312 | 1,254 |

*) siehe Tabelle 2

In Anwesenheit des Siloxans ist ein deutlich verringerter Abbau des Polyesters zu verzeichnen.

Beispiel 6 (Vergleich)

Wie Beispiel 1, jedoch wurde anstelle von PC A die gleiche Mengen eine Polycarbonats auf Basis von Bis-(3,5-dimethyl-4-hydroxyphenyl)-propan (PC B) eingesetzt. PC B η rel : 1,318.

| | | Abbau von Methylpolycarbonat η rel vorher | nachher |
|---|---|---|---|
| 50 g PC B + 50 g PPS C | 320° / 30' | 1,318 | 1,236 |

Beispiel 7

Wie Beispiel 6, jedoch unter Zugabe von 0,5 Gew.-% bezogen auf das Gesamtgewicht der Legierung, des in Beispiel 3 verwendeten Siloxans.

| | | Abbau von Methylpolycarbonat η rel vorher | nachher |
|---|---|---|---|
| 50 g PC B + 50 g PPS C | 0,5 Gew.-Siloxan*) | 1,318 | 1,276 |

*) siehe Tabelle 2

Im Vergleich zu Beispiel 6 ist der Abbau des Polycarbonats durch die Anwesenheit des Siloxans reduziert.

Beispiel 8

Je 50 g von PC A und PPS C werden bei 320 °C 30 Minuten lang in Anwesenheit steigender Mengen

des in Beispiel 3 eingesetzten Siloxans unter Luftausschluß verschmolzen und gemäß Beispiel 1 der Abbau des Polycarbonatanteils geprüft. Mit steigenden Mengen Siloxan kann der Polycarbonatabbau stärker reduziert werden.

| PC - A | PPS - C | Siloxan*) | Abbau Polycarbonat η rel vorher | nachher |
|---|---|---|---|---|
| 50 g | 50 g | 0,125 | 1,295 | 1,231 |
| 50 g | 50 g. | 0,250 | 1,295 | 1,238 |
| 50 g | 50 g | 0,50 | 1,295 | 1,252 |
| 50 g | 50 g | 1,00 | 1,295 | 1,258 |

Beispiel 9

Wie Beispiel 5, jedoch wurde anstelle des Polysiloxans des Beispiels 3 ein Poly-(methyl-H-Siloxan) der Formel I ($R_1 = CH_3$, $R_2 = Si(CH_3)_3$ und $n \sim 50$) eingesetzt. Die relative Lösungsviskosität des aromatischen Polyesters nahm von 1,312 auf 1,248 ab. Die stabilisierende Wirkung der beiden Poly-(methyl-H-Siloxane) ist damit vergleichbar.

Beispiel 10

50 g PPS C wurden mit 1 Gew.-% des Siloxans des Beispiels 3 30 Minuten bei 320 °C unter Luftausschluß verschmolzen. Anschließend wurde das so vorbehandelte PPS-C zusammen mit 50 g Polycarbonat A bei 320 °C 30 Minuten lang unter Luftausschluß verschmolzen. Der Abbau des Polycarbonats ist noch geringer, vergleichsweise zu einer Fahrweise, wo Polycarbonat, Stabilisator und p-Polyphenylensulfid direkt miteinander verschmolzen werden (siehe Beispiel 3). Der Abbau des Polycarbonats, gemessen über die Abnahme der relativen Lösungsviskosität betrug η rel 1,295 auf η rel 1,260.

Beispiel 11

90 Gew.-% PPS C werden mit 10 Gew.-% des aromatischen Polyesters, APE D, über eine Zweiwellenschnecke bei einer Massetemperatur von 331 °C extrudiert. Die als Granulat anfallende Legierung wurde zu Schulterstäben verspritzt und die mechanischen Eigenschaften bestimmt. Der gleiche Versuch wurde wiederholt, jedoch wurden zusätzlich 0,25 Gew.-%, bezogen auf das Gesamtgewicht der Mischung, Polysiloxan des Beispiels 3 zugesetzt. In Tabelle 3 sind die mechanischen Eigenschaften der beiden Mischungen gegenübergestellt. Die mechanischen Eigenschaften der erfindungsgemäß stabilisierten p-Polyphenylensulfidlegierungen sind deutlich besser. Insbesondere die für p-Polyphenylensulfide wichtige Schlagzähigkeit ist durch den Zusatz des erfindungsgemäßen Siloxans von 3,43 kJ/m² auf 11,30 kJ/m² verbessert.

Tabelle 3

| Eigenschaften | Maßeinheit | APE/PPS-Legierungen ohne Siloxan | mit Siloxan |
|---|---|---|---|
| Reißfestigkeit | M Pa | 26,55 | 61,87 |
| Reißdehnung | % | 0,65 | 1,56 |
| Zug-E-Modul | M Pa | 4090 | 4230 |
| Biegefestigkeit | M Pa | 70,25 | 111,94 |
| Biege-E-Modul | M Pa | 3688 | 3616 |
| Schlagzähigkeit | kJ/m² | 3,43 | 11,30 |
| Kerbschlagzähigkeit | kJ/m² | 0,84 | 0,90 |

Beispiel 12

Je ein Gemisch aus 50 % PPS C und 50 % des Polycarbonats B des Beispiels 6 wurde einmal mit und einmal ohne 0,25 Gew.-%, bezogen auf das Gesamtgewicht der Mischung, des Polysiloxans des Beispiels 3 über eine Zweiwellenschnecke extrudiert und anschließend zu Schulterstäben verspritzt. Die Schalgzähigkeit $a_n$ betrug ohne die Siloxanstabilisierung 8,46 kJ/m² und mit der Siloxanstabilisierung 14,51 kJ/m².

## Patentansprüche

1. Verwendung von 0,1-2 Gew.-%, bezogen auf das Gesamtgewicht der Mischung aus p-Polyphenylensulfid mit Siloxan, Siloxanen der allgemeinen Formel I

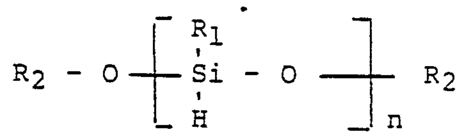 (I)

worin
$R_1$ $C_1$-bis $C_{18}$-Alkyl, $C_5$-$C_6$-Cycloalkyl, $C_2$-$C_{18}$-Alkenyl, $C_5$-$C_6$-Cycloalkenyl oder $C_6$-$C_{12}$-Aryl,
$R_2$ die gleiche Bedeutung wie $R_1$ hat und zusätzlich Trimethylsilyl sein kann und
«n» eine ganze Zahl von 1 bis 100 ist, zur Modifizierung von hochmolekularen p-Polyphenylensulfiden.

2. Hochmolekulare modifizierte p-Polyphenylensulfide, gekennzeichnet durch einen Gehalt von 0,1 bis 2 Gew.-%, bezogen auf Gesamtgewicht der Mischung aus Polyphenylensulfid mit Siloxan, an Siloxanen der Formel I

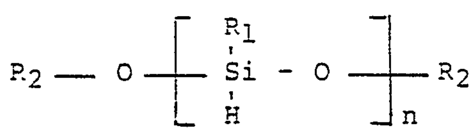 (I)

worin
$R_1$, $R_2$ und «n» die in Anspruch 1 genannte Bedeutung haben.

## Claims

1. Use of 0.1-2 % by weight, based on the total weight of the mixture of p-polyphenylene sulphide with siloxane, of siloxanes of the general formula I

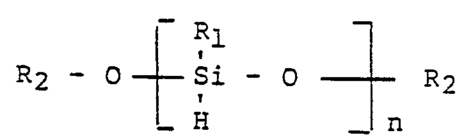 (I)

wherein
$R_1$ $C_1$ to $C_{18}$ alkyl, $C_5$-$C_6$ cycloalkyl, $C_2$-$C_{18}$ alkenyl, $C_5$-$C_6$ cycloalkenyl or $C_6$-$C_{12}$ aryl,
$R_2$ has the same meaning as $R_1$ and can additionally be trimethylsilyl and
«n» is an integer from 1 to 100, for the modification of high molecular weight p-polyphenylene sulphides.

2. High molecular weight modified p-polyphenylene sulphides, characterised in that they contain 0.1 to 2 % by weight, based on the total weight of the mixture of polyphenylene sulphide with siloxane, of siloxanes of the formula I

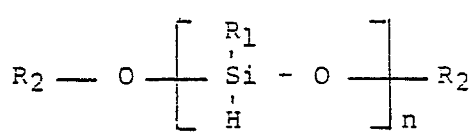 (I)

wherein
$R_1$, $R_2$ and «n» have the meaning given in Claim 1.

**Revendications**

1. Utilisation de 0,1 à 2 % en poids, par rapport au poids global du mélange de sulfure de p-polyphénylène et de siloxane, de siloxanes de formule générale I :

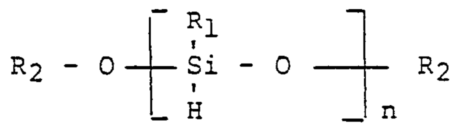

(I)

dans laquelle

$R_1$ est un alcoyle en $C_1$ à $C_{18}$, un cycloalcoyle en $C_5$-$C_6$, un alcényle en $C_2$ à $C_{18}$, un cycloalcényle en $C_5$-$C_6$ ou un aryle en $C_6$-$C_{12}$,

$R_2$ a la même signification que $R_1$ et peut être en plus un triméthylsilyle tandis que

«n» est un nombre entier de 1 à 100, pour la modification de sulfures de p-polyphénylène à poids moléculaire élevé.

2. Sulfures de p-polyphénylène modifiés à poids moléculaire élevé, caractérisés par une teneur de 0,1 à 2 % en poids, par rapport au poids global du mélange de sulfure de polyphénylène et de siloxane, de siloxanes de formule I

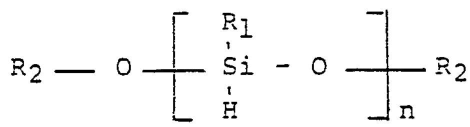

(I)

dans laquelle

$R_1$, $R_2$ et «n» ont la signification citée à la revendication 1.